# EUROPÄISCHE PATENTSCHRIFT

(11) **EP 1 154 218 B1**
(45) Veröffentlichungstag und Bekanntmachung des Hinweises auf die Patenterteilung: **22.09.2004**
(21) Anmeldenummer: 00115775.9
(22) Anmeldetag: 21.07.2000
(51) Int. Cl.: F28F 9/02, F28F 21/08, B23K 20/08, B23K 20/16

(54) **Plattenwärmetauscher**
Plate heat exchanger
Echangeur de chaleur à plaques

(30) Priorität: 09.05.2000 DE 10022595
(43) Veröffentlichungstag der Anmeldung: 14.11.2001
(73) Patentinhaber: Linde Aktiengesellschaft, 65189 Wiesbaden (DE)
(72) Erfinder: Dietrich, Jörg, Dipl.-Ing., 80637 München (DE)
(74) Vertreter: Imhof, Dietmar

(56) Entgegenhaltungen:
- EP-A- 0 267 349
- EP-A- 1 008 828
- DE-U- 9 319 559
- GB-A- 2 073 395
- US-A- 3 664 816
- PATENT ABSTRACTS OF JAPAN vol. 016, no. 299 (M-1274), 2. Juli 1992 (1992-07-02) -& JP 04 081288 A (KOBE STEEL LTD), 13. März 1992 (1992-03-13)

## Beschreibung

Die Erfindung betrifft einen Plattenwärmetauscher gemäß dem Oberbegriff des Anspruchs 1.

Plattenwärmetauscher sind aus mehreren übereinander gestapelten, gewellten Lamellen aufgebaut, die jeweils durch ebene Trennbleche gegeneinander begrenzt sind und fest miteinander verbunden werden, so daß ein Wärmetauscherblock entsteht. Die Lamellen und Trennbleche bilden dabei eine Vielzahl von Wärmeaustauschpassagen für die miteinander in Wärmeaustausch zu bringenden Stoffströme. Zur Zu- und Abführung der Stoffströme werden über den Eintritts- bzw. Austrittsöffnungen der Wärmeaustauschpassagen Sammler mit Stutzen angebracht, die zum Anschluß der zu- bzw. abführenden Rohrleitungen dienen.

Alle Bauteile der Plattenwärmetauscher sind aus dem selben Material, häufig aus Aluminium oder Aluminiumlegierungen gefertigt. Für die Sammler werden zwar Legierungen mit höheren Festigkeitswerten verwendet, im Vergleich zu Stahl besitzen Aluminiumsammler jedoch eine nur geringe Festigkeit. Bei hohen Drücken können daher nur Sammler und Stutzen mit relativ kleinem Durchmesser verwendet werden. Um große Mengenströme unter hohem Druck in Aluminiumwärmetauschem anwärmen oder abkühlen zu können, müssen häufig mehrere einzelne Plattenwärmetauscherblöcke parallel angeordnet werden. Aber selbst bei den einzelnen Blöcken sind unter diesen Bedingungen Doppelsammler mit mehreren Stutzen unvermeidbar. Die Konstruktion von Aluminiumplattenwärmetauschern wird deshalb bei bestimmten Strömungskriterien, insbesondere hohem Druck und großen Mengen, sehr aufwendig.

Aufgabe vorliegender Erfindung ist es, die Festigkeit eines Plattenwärmetauschers zu erhöhen.

Diese Aufgabe wird erfindungsgemäß durch einen Plattenwärmetauscher gemäß Anspruchs 1 gelöst.

Der Plattenwärmetauscher wird erfindungsgemäß nicht mehr nur aus einem Werkstoff, sondern aus mindestens zwei verschiedenen metallischen Werkstoffen gefertigt. Die beiden Werkstoffe können den spezifischen Anforderungen, die an die einzelnen Bauteile des Plattenwärmetauschers gestellt werden, angepaßt werden. So wird für Bauteile, die einer höheren Druckbelastung ausgesetzt werden, beispielsweise für die Sammler des Wärmetauschers, ein Metall verwendet, welches eine höhere Festigkeit besitzt als das für den Wärmetauscherblock eingesetzte Material.

Vorzugsweise werden der Wärmetauscherblock, das Zwischenstück und der Sammler stoffschlüssig miteinander verbunden. Auch bei hohen Belastungen des Plattenwärmetauschers stellt der Stoffschluß eine stabile, dauerhafte und dichte Verbindung dar. Durch form- oder kraftschlüssige Verbindungen, beispielsweise das Verschrauben zweier Bauteile miteinander, ist es aufgrund der unterschiedlichen Wärmeausdehnungskoeffizienten sehr aufwendig, die Bauteile so fest miteinander zu verbinden, daß die Dichtheit der Strömungswege in dem Plattenwärmetauscher dauerhaft gewährleistet ist.

Wie bereits erwähnt, ist eine den thermischen Belastungen eines Wärmetauschers standhaltende Verbindung von verschiedenen metallischen Werkstoffen häufig sehr schwierig herzustellen. Form- und kraftschlüssige Verbindungen halten der Wärmeausdehnung nicht stand und ein stabiler Stoffschluß ist teilweise aufgrund unterschiedlicher Materialeigenschaften der beteiligten Metalle nicht möglich. So sind beispielsweise Aluminium und Stahl zumindest im industriellen Maßstab nicht miteinander verschweißbar.

Es hat sich daher als vorteilhaft erwiesen, das Zwischenstück aus mindestens zwei verschiedenen Metallen oder Metallegierungen zu bringen. Die Metalle des Zwischenstücks sind so ausgewählt, daß zumindest zwei Oberflächen des Zwischenstücks vorhanden sind, die jeweils mit einem der beiden Bauteile fest und thermisch belastbar verbunden werden können. Vorzugsweise werden die Bauteile jeweils mit einer der beiden Seiten verschweißt.

Das Zwischenstück kann auf verschiedene Arten hergestellt werden, wobei jedoch sichergestellt werden muß, daß vorgegebene Festigkeitseigenschaften eingehalten werden. Die einzelnen Metallschichten des Zwischenstücks können beispielsweise durch thermische Beschichtung aufgebracht werden. Vorzugsweise wird das Zwischenstück aber durch Sprengplattierung zweier oder mehrerer Metalle hergestellt. Hierzu werden zwei oder mehr Metallplatten aufeinandergelegt und mit einer Sprengstoffschicht versehen. Die bei der Sprengung entstehenden Drücke bringen die Metalle im Bereich der Grenzschicht zwischen zwei Metallplatten in den plastischen Zustand, wodurch eine feste und dauerhafte Verbindung entsteht.

Die Erfindung bettrift einen Plattenwärmetauscher, bei denen die Bleche oder der gesamte Wärmetauscherblock aus Aluminium bestehen. Bisher werden an derartigen Wärmetauscherblöcken auch Sammler aus Aluminium angebracht, womit allerdings die eingangs erwähnten Festigkeitsprobleme einhergehen. Hier werden nunmehr Sammler aus Stahl, insbesondere Cr-Ni-Stahl, Tieftemperaturstahl oder C-Stahl, verwendet. Die höheren Festigkeitswerte der Stahlsammler erlauben größere Sammler- und Stutzenabmessungen. Die bisher nötigen Doppelsammler mit Mehrfachstutzen oder gar die Parallelschaltung mehrerer Plattenwärmetauscher wird vermieden oder zumindest reduziert. Dadurch entfallen auch teure und aufwendige Zwischenverrohrungen zwischen einzelnen Wärmetauscherblöcken.

Sammler aus Stahl bringen noch weitere Kostenvorteile bei der Verrohrung. Für Rohrleitungen zwischen verschiedenen Plattenwärmetauschern, die nun in Stahl anstelle von Aluminium ausgeführt werden können, können aufgrund der höheren Festigkeit von Stahl im Vergleich zu Aluminium geringere Wandstärken vorgesehen werden. Die Kosten und der Schweißaufwand werden deutlich gesenkt. Die von den Plattenwärmetauschem weg- bzw. zu diesen hinführenden Stahlrohrleitungen können direkt an die Stutzen der Sammler angeschweißt werden und müssen nicht mehr über Flanschverbindungen mit diesen verbunden werden.

Die Sammler werden bevorzugt über ein Zwischenstück aus einem Verbundwerkstoff, der zumindest Aluminium und Stahl beinhaltet, an dem Wärmetauscherblock befestigt. Das Zwischenstück wird aus einer Platte aus dem Verbundwerkstoff ausgeschnitten, das in der Größe etwa der Kontaktfläche zwischen dem Sammler und dem Wärmetauscherblock entspricht. Zwei gegenüberliegende Seiten des Zwischenstücks bestehen aus Aluminium beziehungsweise Stahl. Das Zwischenstück wird mit seiner Stahlseite an den Sammler geschweißt und anschließend wird der so vorbereitete Sammler mit der Aluminiumseite an den Wärmetauscherblock geschweißt.

Durch das Zwischenstück ergibt sich eine leicht erhöhte Position des Sammlers, wodurch die Schweißnähte besser zugänglich werden und die Schweißarbeit erleichtert wird. Zudem kann der Abstand zwischen zwei benachbarten Sammlem verringert werden, was eine Verkleinerung des Wärmetauscherblocks zur Folge hat.

Der erfindungsgemäße Wärmetauscher ist im Temperaturbereich zwischen -270 °C und +200 °C und bei einem Betriebsdruck vom Vakuum bis über 100 bar einsetzbar. Im gesamten Einsatzbereich ist die Gasdichtheit und Stabilität des Wärmetauschers gewährleistet.

Die Erfindung sowie weitere Einzelheiten der Erfindung werden im folgenden anhand von in den Zeichnungen dargestellten Ausführungsbeispielen näher erläutert. Hierbei zeigen:
- Figur 1: schematisch den Aufbau eines erfindungsgemäßen Plattenwärmetauschers und
- Figur 2: den Verbundwerkstoff im Detail.

Aus gewellten und ebenen Aluminiumblechen wird in bekannter Weise ein Wärmetauscherblock 1 zusammengesetzt und in einem Lötofen verlötet. Die zwischen den Blechen gebildeten Wärmeaustauschpassagen werden nach außen durch Abschlußleisten abgegrenzt. Ein Bereich 2 dient als Einlauföffnung zu den Wärmeaustauschpassagen. Ein Sammler 3, der mit einem Anschlußstutzen 4 versehen ist, stellt eine Strömungsverbindung zwischen der nicht dargestellten Zufuhrleitung für eines der dem Wärmetausch zu unterziehenden Fluide, die an den Stutzen 4 angeschlossen wird, und den Wärmeaustauschpassagen her.

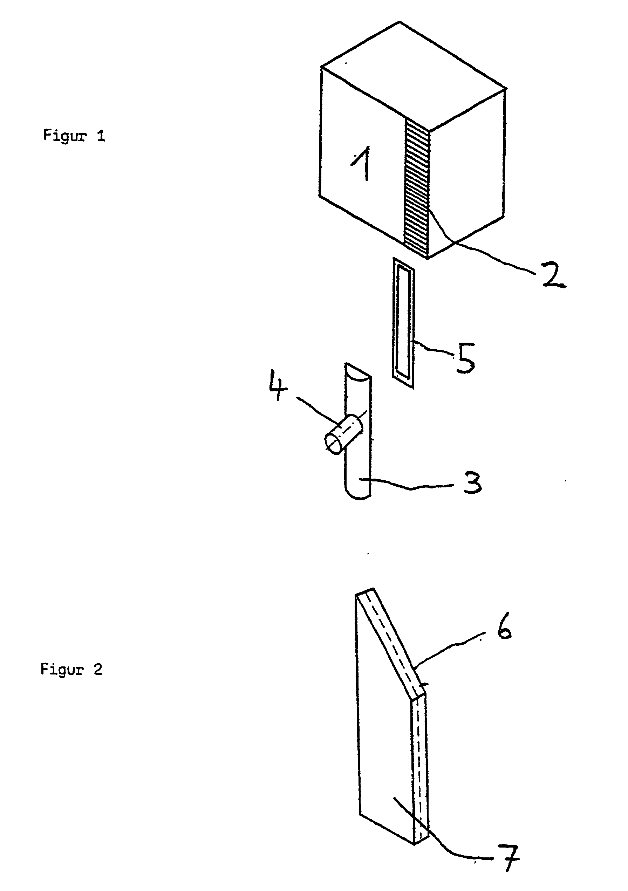

An den Sammler 3 wird ein Rahmen 5 geschweißt und der so vorbereitete Sammler wird anschließend an der Einlauföffnung 2 gasdicht angeschweißt. Der Rahmen 5 ist in Figur 2 genauer dargestellt. Der Rahmen 5 besteht aus einer Aluminiumschicht 6 und einem Stahlblech 7, die mittels eines Sprengplattierungsverfahrens miteinander verbunden werden. Der so hergestellte Plattenwärmetauscher zeichnet sich durch eine hohe Festigkeit aus und wird bevorzugt bei Hochdruckanwendungen eingesetzt.

## Patentansprüche

1. Plattenwärmetauscher mit einem Wärmetauscherblock, der mehrere parallel zueinander angeordnete Bleche aus Aluminium aufweist, die zumindest teilweise gewellt sind und eine Vielzahl von Wärmeaustauschpassagen bilden, sowie mit mindestens einem Sammler, der eine Strömungsverbindung zwischen mindestens einem Teil der Wärmeaustauschpassagen herstellt, **dadurch gekennzeichnet, daß** der Sammler aus Stahl besteht und über ein Zwischenstück aus mindestens zwei verschiedenen Metallen oder Metallegierungen an dem Wärmetauscherblock befestigt ist.

2. Plattenwärmetauscher nach Anspruch 1, **dadurch gekennzeichnet, daß** der Wärmetauscherblock, das Zwischenstück und der Sammler jeweils stoffschlüssig miteinander verbunden sind.

3. Plattenwärmetauscher nach Anspruch 1 oder 2, **dadurch gekennzeichnet, daß** das Zwischenstück (5) durch Sprengplattierung hergestellt ist.

4. Plattenwärmetauscher nach einem der Ansprüche 1 bis 3, **dadurch gekennzeichnet, daß** der Sammler (3) aus Cr-Ni-Stahl, Tieftemperaturstahl oder C-Stahl besteht.

5. Plattenwärmetauscher nach einem der Ansprüche 1 bis 4, **dadurch gekennzeichnet, daß** das Zwischenstück (5) Aluminium und Stahl beinhaltet.

## Claims

1. Plate heat exchanger, with a heat exchanger block which has a plurality of aluminium sheets which are arranged parallel to one another, are at least partially corrugated and form a multiplicity of heat exchange passages, and with at least one header which makes a flow connection between at least some of the heat exchange passages, **characterized in that** the header consists of steel and is fastened to the heat exchanger block by an intermediate piece consisting of at least two different metals or metal alloys.

2. Plate heat exchanger according to Claim 1, **characterized in that** the heat exchanger block, the intermediate piece and the header are in each case connected to one another in a materially integral manner.

3. Plate heat exchanger according to Claim 1 or 2, **characterized in that** the intermediate piece (5) is produced by explosion plating.

4. Plate heat exchanger according to one of Claims 1 to 3, **characterized in that** the header (3) consists of CrNi steel, low-temperature steel or carbon steel.

5. Plate heat exchanger according to one of Claims 1 to 4, **characterized in that** the intermediate piece (5) contains aluminium and steel.

## Revendications

1. Echangeur de chaleur à plaques comprenant un bloc échangeur de chaleur qui présente plusieurs tôles en aluminium disposées parallèlement les unes aux autres, qui sont au moins partiellement ondulées et qui forment une pluralité de passages d'échange de chaleur, et comprenant aussi au moins un collecteur, qui produit une connexion d'écoulement entre au moins une partie des passages d'échange de chaleur, **caractérisé en ce que** le collecteur se compose d'acier et est fixé par le biais d'une pièce intermédiaire en au moins deux métaux ou alliages de métaux différents au bloc échangeur de chaleur.

2. Echangeur de chaleur à plaques selon la revendication 1, **caractérisé en ce que** le bloc échangeur de chaleur, la pièce intermédiaire et le collecteur sont connectés les uns aux autres à chaque fois par liaison de matière.

3. Echangeur de chaleur à plaques selon la revendication 1 ou 2, **caractérisé en ce que** la pièce intermédiaire (5) est fabriquée par plaquage par explosion.

4. Echangeur de chaleur à plaques selon l'une quelconque des revendications 1 à 3, **caractérisé en ce que** le collecteur (3) se compose d'un acier Cr-Ni, d'un acier basse température ou d'un acier C.

5. Echangeur de chaleur à plaques selon l'une quelconque des revendications 1 à 4, **caractérisé en ce que** la pièce intermédiaire (5) contient de l'aluminium et de l'acier.
